# EUROPÄISCHE PATENTSCHRIFT

(11) **EP 4 462 009 B1**
(45) Veröffentlichungstag und Bekanntmachung des Hinweises auf die Patenterteilung: **03.06.2026**
(21) Anmeldenummer: 24170769.4
(22) Anmeldetag: 17.04.2024
(51) Int. Cl.: F17C 3/00, F17C 9/00

(54) **TREIBSTOFFTANK FÜR FLÜSSIGTREIBSTOFF UND VERFAHREN ZUM BETRIEB DIESES TREIBSTOFFTANKS**
LIQUID FUEL TANK AND METHOD FOR OPERATING SAID FUEL TANK
RÉSERVOIR DE CARBURANT POUR CARBURANT LIQUIDE ET PROCÉDÉ DE FONCTIONNEMENT DUDIT RÉSERVOIR DE CARBURANT

(30) Priorität: 12.05.2023 DE 102023112617
(43) Veröffentlichungstag der Anmeldung: 13.11.2024
(73) Patentinhaber: ArianeGroup GmbH, 82024 Taufkirchen (DE)
(72) Erfinder: Hessel, Christian, 28199 Bremen (DE)
(74) Vertreter: Marschall, Stefan

(56) Entgegenhaltungen:
- CN-B- 115 199 437
- US-A1- 2021 403 180
- US-A1- 2023 027 991

## Beschreibung

Die Erfindung bezieht sich auf einen Treibstofftank für Flüssigtreibstoff nach dem Oberbegriff des Anspruchs 1 und einem Verfahren zum Betrieb dieses Treibstofftanks.

Derartige Treibstofftanks werden im Weltraumflug eingesetzt.

Das Treibstoffmanagement für kryogene und lagerfähige Oberstufen und auch wiederverwendbarer Unterstufen steht im zentralen Fokus die Funktionalität der Trägersysteme zu erweitern und Mission zu ermöglichen, die vorher nicht möglich waren.

Nach der ersten Antriebsphase der Unter- und Oberstufe ist bei kleinen Restmengen an Flüssigtreibstoff und großen Volumen des Treibstofftanks der Flüssigtreibstoff für geeignete Konditionierung einer wiederholten Zündung des Triebwerks schwerer zu kontrollieren. Die Konditionierung besteht darin, dass der Flüssigtreibstoff sich am Tankauslass befindet, eine entsprechende Temperatur bei gegebenen Mindestdruck hat und eine limitierte Anzahl bzw. Größe an Blasen vorweist. Diese drei Bedingungen sind nur schwer im Mikro-Gravitationsflug der sogenannten ballistischen Phase zu erreichen und ferner bei aktiven Manöver wie der Aussetzung von Nutzlasten fast nicht einstellbar.

Nach der ersten Antriebsphase ist der unterkühlte kryogene Flüssigtreibstoff am unteren Tankboden abgesetzt. Danach beginnt entweder die ballistische Phase oder die Nutzlastaussetzung, bei denen ein Teil des Flüssigtreibstoffs zu den oberen Tanksegmenten gelangt, wo dieser Teil des Flüssigtreibstoffs durch das über die obere Leerraumgasraumzufuhr den Tank zugeführte Bedrückungsgas und den äußeren Wärmebücken erwärmt wird.

Ähnliche Effekt sind für lagerfähige Flüssigtreibstoffe bekannt, wenn ein warmes Bedrückungsgas erzeugt bzw. benutzt wird und Verdampfung oder Zersetzung des Flüssigtreibstoffs auftritt, wenn dieser in Kontakt mit warmen und/ oder heißen Strukturen oder Gasen kommen.

Für die Nutzlastaussetzung sind teilweise negative Beschleunigungen gegeben und der kryogene bzw. lagerfähige Flüssigtreibstoff bewegt sich durch das warme Leerraumgas und den Tankwänden entlang zum oberen Tanksegment, wobei das Leerraumgas und die Tankwand von dem Flüssigtreibstoff gekühlt werden und die Wärme in den Flüssigtreibstoff wandert bzw. Boil-off, einem kontinuierlichen Abdampfen des Flüssigtreibstoffs, entsteht.

Auch die Schwapp-Bewegung ist ein Problem des Treibstoffmanagements und verursacht Probleme der Stabilisierung des Flüssigtreibstoffs.

Zur Vermeidung der zuvor genannten Probleme sind verschiedene Ansätze bekannt. Passive Treibstoffmanagementgeräte, welche über Kapillarkräfte wirken, können nur einen kleinen Teil lokal behalten (z.B. am Tankauslass), aber nicht den ganzen Rest des Flüssigtreibstoffs und kommen auch bei zu großen Beschleunigungen an ihre Grenzen bzw. sind für lagerfähige Flüssigtreibstoffe gar nicht geeignet. In der ballistischen Phase gibt es die Möglichkeit, den Flüssigtreibstoff mittels konstanten Schubs eines Hilfssystems am Tankboden abzusetzen, wobei aber zum Betrieb dieses Hilfssystems permanent Flüssigtreibstoff benötigt wird.

Anderen Strategien in der ballistischen Phase sind die Spin und 3-Achsen-Stabilisierung, welche aber zu einer ähnlichen Problematik nach Beendigung der Phase und der Phase einer wiederholten Zündung des Triebwerks führen. Eine strukturelle Lösung mittels eines geschlossenen Tanksystems hat entsprechende Probleme der integralen Fertigung und kann nicht als Kit betrachtet werden. Der Tank-in-Tank für einen metallischen Tank hat die Herausforderung die System Masse gering zu halten.

Auch offene Architekturen über das Man-Hole-Cover als Start-Basket, haben Probleme den Flüssigtreibstoff zu speichern und können auch nur einen gewissen Anteil an Flüssigtreibstoff halten, so dass der Rest an Flüssigtreibstoff dann denselben Bedingung im Tank ausgesetzt sein würde, was zu einer ähnlichen Gesamtproblematik der Konditionierung des Flüssigtreibstoffs vor der wiederholten Zündung führt.

Membran-Tanks sind für lagerfähige Flüssigtreibstoffe bekannt, aber für kryogene Flüssigtreibstoffe aktuell nicht kompatibel.

Flexible Membrane für das Sammeln des Flüssigtreibstoffs haben teilweise, je nach ihrer Anordnung im Tank, den Nachteil, dass eine vergrößerte Evaporation des Flüssigtreibstoffs aufgrund der Oberfläche und der Wärmebrücken auftritt, so dass auch hier nur ein Teil des Restes des Flüssigtreibstoffs gesammelt werden kann.

Die Patentanmeldung US 2021/403180 A1 zeigt einen kryogenen Treibstofftank mit zwei Tankräumen, wobei in den einen Tankraum eine Leergaszufuhr mündet und sich aus dem anderen Tankraum ein Tankauslass erstreckt.

Der Erfindung liegt daher die Aufgabe zu Grunde, ein Treibstofftank für Flüssigtreibstoff und ein Verfahren zum Betrieb dieses Treibstofftankes zu entwickeln, bei der nach der ersten Antriebsphase, in der ballistische Phase und bei einer Nutzlastaussetzung zum einen ein Verteilen des Flüssigtreibstoffs im Treibstofftank verhindert sowie zum andern Vermischen von Flüssigtreibstoff und dem in der ersten Antriebsphase entstandenen heißen Bedrückungsgas vermindert wird.

Vorrichtungsseitig wird diese Aufgabe durch die Merkmale des Anspruchs 1 und verfahrensseitig durch die Merkmale des Anspruchs 8 gelöst. Zweckdienliche Ausgestaltungen ergeben sich aus den Unteransprüchen. Der neue Treibstofftank für Flüssigtreibstoff beseitigt die genannten Nachteile des Standes der Technik.

Ein erfindungsgemäßer Treibstofftank für Flüssigtreibstoff hat einen Tankauslass und eine Leerraumgaszufuhr, die eine Tankwandung jeweils in einem Bereich durchsetzen. Erfindungsgemäß ist ein Innenraum des Treibstofftanks durch einen Abteiltrenner mit einem Abteiltor in zwei Abteile unterteilt, von denen das eine Abteil dem Tankauslass und das andere Abteil der Leergaszufuhr zugeordnet ist. Die beiden Abteile sind durch ein Abteiltor fluidtechnisch miteinander verbindbar oder voneinander trennbar. Vorteilhaft an dem erfindungsgemäßen Treibstofftank ist, dass im Orbit der Flüssigtreibstoff im tankauslassseitigen Abteil (in der Antriebsphase ist dies das untere Abteil und das leergaszufuhrseitige ist das obere Abteil) gesammelt werden kann, wo wegen der begrenzten Kontaktfläche zur Tankwand nur geringe Temperaturaustausch zwischen Flüssigtreibstoff und Tankwand stattfindet. Zudem wird dadurch ein kontinuierliches Absetzen der Flüssigtreibstoffe in der Ballistischen Phase mit einem Treibstoffverlust bei gleichzeitigem Boil-off Mehrverlust verhindert.

Auch wird dadurch eine bessere Orientierung bzw. weniger Störmomente und geringer Ausgleichsverbrauch der Stufe bei kopflastigen Nutzlasten erreicht. Das Abteiltor weist eine Hebescheibe mit einem an der Hebescheibe befestigten Diffusorring auf. Durch diese Maßnahme werden einerseits bei geöffnetem Abteiltor die beiden Abteile über den Diffusorring miteinander verbunden. Andererseits werden bei geschlossenem Abteiltor die beiden Abteile durch die Hebescheibe voneinander getrennt.

Auch ist es von Vorteil, wenn der Abteiltrenner einen äußeren, mit der Tankwand verbundenen Ring und einem das Abteiltor tragenden inneren Ring aufweist, wobei der äußere Ring und der innere Ring mittels einer Auflageträgerstruktur miteinander verbunden sind und diese Auflagestruktur einen Plattenverbund trägt. Der Abteiltrenner lässt sich so in eine Vielzahl von gleichen Segmenten unterteilen, wobei jedes Segment eine Platte des Plattenverbundes aufnimmt. Die Platten sind somit bevorzugterweise "tortenstückartig" und mechanisch oder stoffschlüssig mit der Auflageträgerstruktur verbunden. Ein solcher Abteiltrenner zeichnet sich durch eine hohe strukturelle Stabilität aus und kann modular aufgebaut werden.

Bevorzugterweise bestehen die Platten des Plattenverbundes aus dem gleichen Material bzw. einem Material, dass ein gleiches bzw. ähnliches Wärmeausdehnungsverhalten wie das Material der Tankhülle bzw. Tankwand zeigt. Durch diese Maßnahme können Wärmespannungen reduziert werden. Wenn die Tankhülle aus einem faserverstärkten Verbundkunststoff besteht, wird der Plattenverbund aus dem gleichen bzw. ähnlichen Verbundkunststoff hergestellt. Beispielhafte Fasern sind Kohlenfasern und Glasfaser. Beispielhafte Verbundkunststoffe CFRP (carbon fibre reinforced plastics) und GFRP (glas fibre reinforced plastics). Alternative Fasern sind zum Beispiel Aramidfasern. Der Plattenverbund kann auch als ein CFRP-GFRP-Verbund ausgeführt sein.

Die Stabilität der Auflageträgerstruktur kann weiter erhöht werden, wenn der innere Ring mit der unteren Tankabdeckung mit Hilfe einer Tankinnenstruktur verbunden ist.

Bei einer Ausführungsform ist die Halterung hohlzylinderförmig ausgebildet und weist auf ihrer Mantelfläche einen oberen Diffusor aufweist. Zudem sieht diese Ausführungsform einen zweiten Diffusorring und einen Schiebering vor, die derart angeordnet sind, dass in einer mittleren Stellung des Abteiltors der innere Ring den zweiten Diffusorring verschließt und der Schieberring den oberen Diffusor verschließt.

Auch ist es von Vorteil, wenn der flexible Abteiltrenner derart im Innenraum des Treibstofftanks angeordnet ist, dass das obere Abteil die für die ersten Antriebsphase benötigten Menge an Flüssigtreibstoff aufnimmt und sich der in den nächsten Antriebsphasen benötigte Flüssigtreibstoff im unteren Abteil befindet.

Bevorzugter Weise ist im unteren Abteil eine weitere Leerraumgaszufuhr angeordnet. Durch diese Maßnahme können Druckunterschiede zwischen den beiden Abteilen ausgeglichen werden.

Von besonderem Vorteil ist es, wenn die Leerraumgaszufuhren in Form eines Diffusors ausgeführt sind, weil dadurch jeweils eine homogene Einströmung des Leerraumgases in die Abteile gewährleistet wird.

Verfahrensseitig ist es von Vorteil, wenn das Abteiltor bei Manövern mit Schwapp-Bewegungen und beim Aussetzten der Nutzlast geschlossen ist, weil dadurch eine Verteilung des Flüssigtreibstoffs über die gesamte Tankwand vermieden wird.

Von Vorteil ist es auch, wenn bei geschlossenem Abteitor und gleichzeitiger Flüssigtreibstoffentnahme aus dem unteren Abteil über die eigene Leerraumgaszufuhr ein Inertgas oder anderen Quellen in das untere Abteil zugeführt wird, weil dadurch Druckdifferenzen zwischen den beiden Abteilen vermindert werden können.

Der neue Treibstofftank für einen, bevorzugterweise aber nicht begrenzenden kryogenen Flüssigtreibstoff, soll anhand eines Ausführungsbeispiels näher erläutert werden.

Dazu zeigen:
- Fig. 1:: eine Schnittdarstellung des Treibstofftanks in einer Seitenansicht und
- Fig. 2:: eine Schnittdarstellung des Treibstofftanks im Querschnitt,
- Fig. 3:: einen Ausschnitt aus Fig. 1,
- Fig. 4:: Fig. 3 mit geschlossenem Abteiltor,
- Fig. 5:: Füllstände des Treibstofftanks vor der ersten Antriebsphase,
- Fig. 6:: Füllstände des Treibstofftanks nach der ersten Antriebsphase,
- Fig. 7:: Füllstände des Treibstofftanks nach der ersten Antriebsphase mit geschlossenem Abteiltor,
- Fig. 8:: eine alternative Ausführung mit offenem Abteiltor,
- Fig. 9:: die alternative Ausführung mit einem Abteiltor in einer mittleren Stellung,
- Fig. 10:: die alternative Ausführung mit geschlossenem Abteiltor, und
- Figuren 11, 12 und 13:: vereinfachte Darstellungen der Figuren 8,9 und 10.

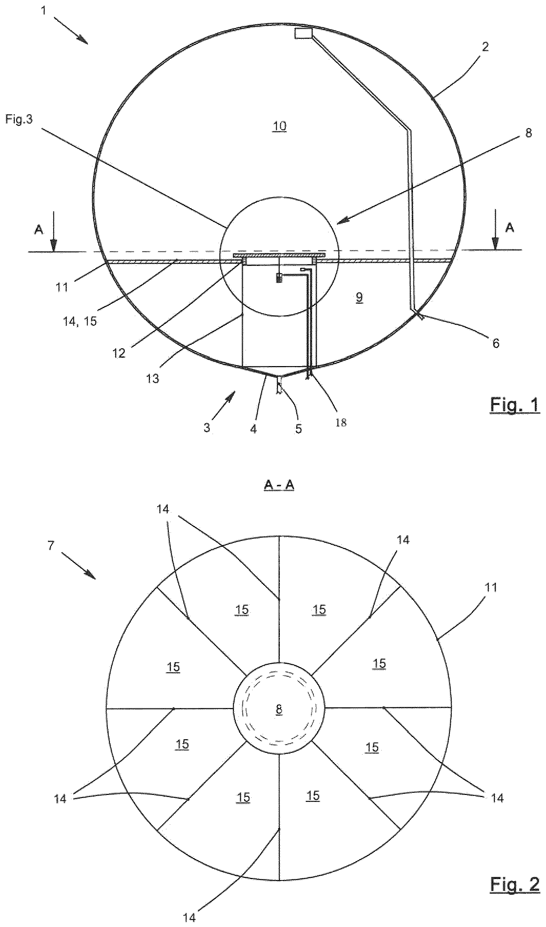

Das hier in Figur 1 gezeigte Ausführungsbeispiel eines erfindungsgemäßen Treibstofftanks 1 für Treibstoffe weist eine Tankwand 2 mit einem Mannloch 3 auf, wobei in einer Mannlochabdeckung 4 ein Tankauslass 5 und durch die Tankwand 2 eine Leerraumgaszufuhr 6 angeordnet sind. Der Treibstofftank 1 ist beispielsweise ein Treibstofftank einer Trägerrakete.

Der Tank 1 hat hier einen kreisförmigen Querschnitt (siehe Schnitt A-A in Figur 2). Der Innenraum des Treibstofftanks 1 ist durch einen Abteiltrenner 7 mit einem Abteiltor 8 in ein unteres Abteil 9 und ein oberes Abteil 10 unterteilt.

Der Abteiltrenner 7 weist einen äußeren, mit der Tankwand 2 verbundenen Ring 11 und einem inneren Ring 12 auf, welcher über eine Halterung 13 mit der unteren Tankabdeckung verbunden ist. Der äußere Ring 11 und der innere Ring 12 sind mittels einer Auflageträgerstruktur 14 miteinanderverbunden.

Der äußere Ring 11 hat einen zur Tankinnenwandung im Anbindungsbereich korrespondierende Außenkontur. Der innere Ring 12 ist um ein Vielfaches kleiner als der äußere Ring 11 und konzentrisch zum äußeren Ring 11 angeordnet.

Die Auflageträgerstruktur 14 umfasst längliche Profile, die sich sternförmig zwischen den Ringen 11, 12 erstrecken und fest mit diesen verbunden sind. Die Profile teilen einen Ringbereich zwischen den Ringen 11, 12 in eine Vielzahl von gleich großen Segmenten.

Die Auflageträgerstruktur 14 trägt einen Plattenverbund 15 (z.B. CFRP-GFRP-Verbund), der eine Vielzahl von einzelnen Platten aufweist, Jede Platte ist fluiddicht und hat eine einem Segment korrespondierende Außenkontur bzw. Fläche. Die Platten bedecken bzw. verschließen die Segmente fluiddicht und sind mit der Auflageträgerstruktur 14, dem äußeren Ring 11 und dem inneren Ring 12 mechanisch fixiert bzw. verklebt ist.

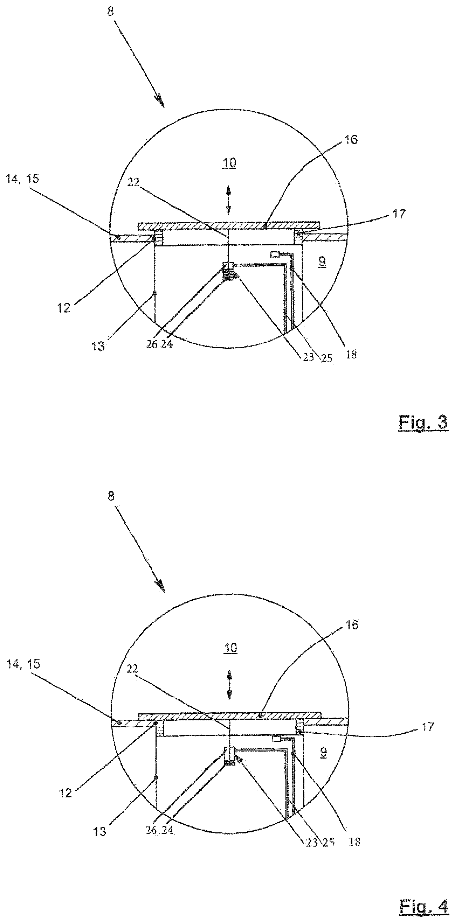

Wie in den Figuren 3 und 4 skizziert, befindet sich im inneren Ring 12 das Abteiltor 8, welches eine Hebescheibe 16 mit einem Diffusorring 17 aufweist. Der Diffusorring 17 ist an der Hebescheibe 16 angebunden und hat einen Außendurchmesser, der einem Innendurchmesser des Abteiltors 8 entspricht. Der Diffusorring 17 führt somit jede Bewegung der Hebescheibe 17 mit aus bzw. wird von der Hebescheibe 17 mitgeführt.

In Figur 3 ist das Abteiltor 8 nominal geöffnet und lässt den Flüssigtreibstoff oder das Leerraumgas über den Diffusorring 17 vom oberen Abteil 10 zum unteren Abteil 9. Der Diffusorring 17 bewirkt dabei eine optimale Verteilung des in das untere Abteil 9 eindringende Leerraumgases und ermöglicht damit für einen geeigneten Druckausgleich zwischen den beiden Abteils 9, 10.

Beim Durchströmen des Diffusorrings 17 wird ein Druckverlust erzeugt, welcher sich aber bei der ersten Antriebsphase nicht negativ auf die Triebwerksleistung auswirkt, da die Stratifikation noch nicht soweit fortgeschritten ist und bis zur Pumpenkavitation der Flüssigtreibstoff noch stark unterkühlt ist.

In Figur 4 ist die Hebescheibe 16 auf fluiddicht auf der Auflageträgerstruktur 14, insbesondere auf dem Plattenverbund 15, abgesenkt und das Abteilrohr 8 somit verschlossen. Das Anheben und Absenken der Hebescheibe 16 erfolgt über eine mit der Hebescheibe 16 verbundenen Stößelstange 22, der tankauslassseitig mittig an der Hebescheibe 16 angreift und mit einer Zylinderkolbeneinheit 23 in Wirkverbindung steht (nicht beziffert). Die Zylinderkolbeneinheit 23 kann weist in einem Federraum eine Druckfeder 24 auf, mittels der die Hebescheibe 16 in Ihrer Öffnungsstellung (Figur 3) gehalten wird. Zum Überführen der Hebescheibe 16 in ihre Schließstellung (Figur 4) wird über ein Leitung 25 ein Fluiddruck in einen Zylinderraum 26 zu führen, derart, dass ein Kolben mit einer gegen die Federkraft wirkenden und diese überwindenden Druckkraft beaufschlagt wird, so dass die Druckfeder 24 gestaucht wird und hierdurch die Stößelstange 22 und somit die Hebescheibe 16 mitgenommen wird. Die Ansteuerung von erforderlichen Ventilen der Zylinderkolbeneinheit 23 kann elektropneumatisch, elektrohydraulisch oder mechanisch erfolgen. Ein beispielhaftes, über die Leitung 25 in den Zylinderraum 26 geführtes Gas zum Erzeugen der Druckkraft zum Schließen des Abteiltors 8 ist Helium.

Denkbar ist es, dass der Hebemechanismus der Hebescheibe 16 ersatzweise auch mit einem Spiralantrieb als rotierende absenkende Scheibe ausgeführt wird.

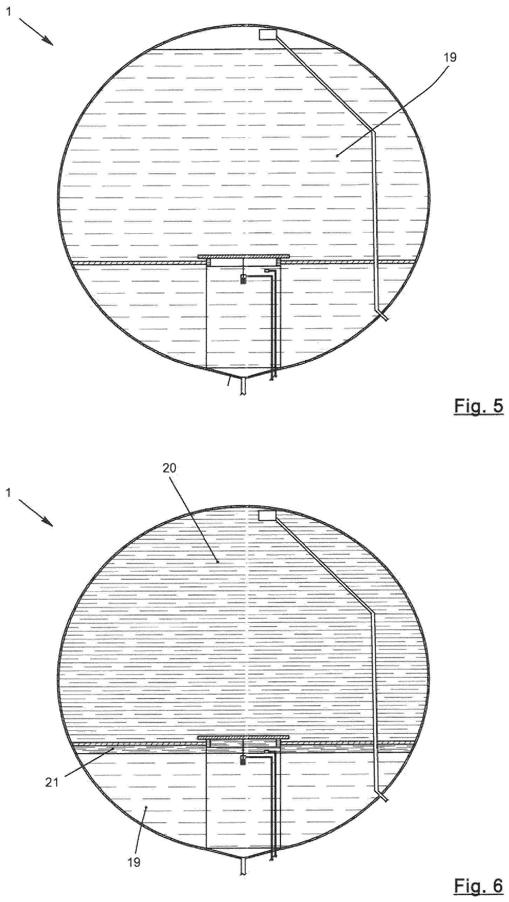

Im Folgen wird anhand der Figuren 5 bis 7 ein bevorzugtes erfindungsgemäßes Verfahren zum Betrieb am Beispiel des Fluges einer Trägerrakete mit dem Treibstofftank 1 von der Erde in den Orbit erläutert werden.

Vor der ersten Antriebsphase (Fig. 5) wird, bei geöffnetem Abteiltor 8, das tankauslassseitige bzw. untere Abteil 9 und das leergaszufuhrseitige bzw. obere Abteil 10 vollständig mit Flüssigtreibstoff 19 gefüllt. Dazu wird über den Tankauslass 5 Flüssigtreibstoff 19 dem unteren Abteil 8 zugeführt und über die Leerraumgaszufuhr 6 das Leerraumgas aus dem oberen Abteil 10 abgeführt.

In der ersten Antriebsphase, dem Flug der Trägerrakete von der Erde bis in den Orbit, ist das Abteiltor 8 weiterhin geöffnet. Aus dem unteren Abteil 9 wird über den Tankauslass 5 Flüssigtreibstoff 19 entnommen und über die Leerraumgaszufuhr 6 das Leerraumgas 20 aus dem oberen Abteil 10 dem unteren Abteil 9 zugeführt. Dabei fließt der Flüssigtreibstoff 19 aus dem oberen Abteil 10 durch den Diffusorring 17 in das untere Abteil 11.

Nach der ersten Antriebsphase (Fig. 6), mit dem Erreichen der Trägerrakete des Orbits, ist das obere Abteil 10 vollständig mit Leerraumgas 20 befüllt. Im unteren Abteil 9 befindet sich Flüssigtreibstoff 19 mit einer kleinen Menge an aus dem oberen Abteil 10 bei der Treibstoffentnahme nachgeströmten Leerraumgas 21. Das Leerraumgas 21 ist dabei auf das Temperaturniveau des Flüssigkeitstreibstoffes 19 abgekühlt. Das Abteiltor 8 ist noch geöffnet.

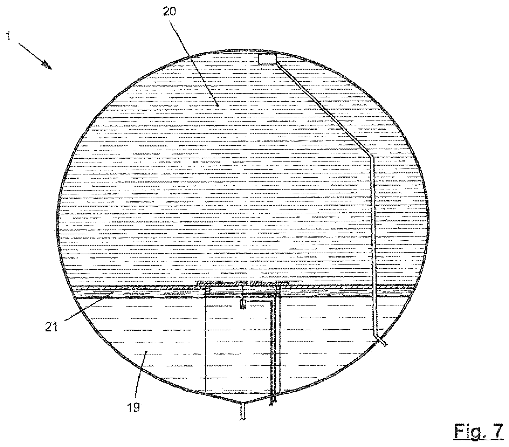

In den nächsten Antriebsphasen (Fig. 7) wird das Abteiltor 8 geschlossen, so dass der Flüssigtreibstoff 19 nicht in das obere Abteil 10 gelangen kann. Dazu wird die Hebescheibe 16 mit Diffusorring 17 aktiviert und schließt dann die beiden Abteile 9, 10 voneinander ab. Dabei sind das hochenergetische Leerraumgas 20 im oberen Abteil 10 und der kalte Flüssigtreibstoff 19 im unteren Abteil 9. Aufgrund der gewählten Materialien des Plattenverbundes 15 findet nur ein geringer Wärmeaustausch mittels Konvektion und Strahlung vom oberen Abteil 10 zum unteren Abteil 9 statt.

Um zu verhindern, dass bei geschlossenem Abteiltor 8 und gleichzeitiger Flüssigtreibstoffentnahme aus dem unteren Abteil 9, ein zu großer Differenzdruck zwischen dem unteren Abteil 9 und dem oberen Abteil 10 entsteht, wird dem unteren Abteil 9 über eine eigene Leerraumgaszufuhr 18 ein Inertgas oder ein Gas aus anderen Quellen (sekundäre Hilfseinheit) zugeführt.

Ist diese eigene Leerraumgaszufuhr 18 nicht vorhanden, kann der Druckausgleich zwischen den unteren Abteil 9 und dem oberen Abteil 10 durch das Öffnen des Abteiltors 8 erfolgen.

Um im unteren Abteil 9 die Evaporation des Flüssigtreibstoffs 19 durch das aus dem oberen Abteil 10 nachgeströmte heiße Leerraumgas 20 zu verringern, ist es denkbar, die Wärmeübertragungsfläche zwischen Flüssigtreibstoff 19 und Leerraumgas 21 zu verringern.

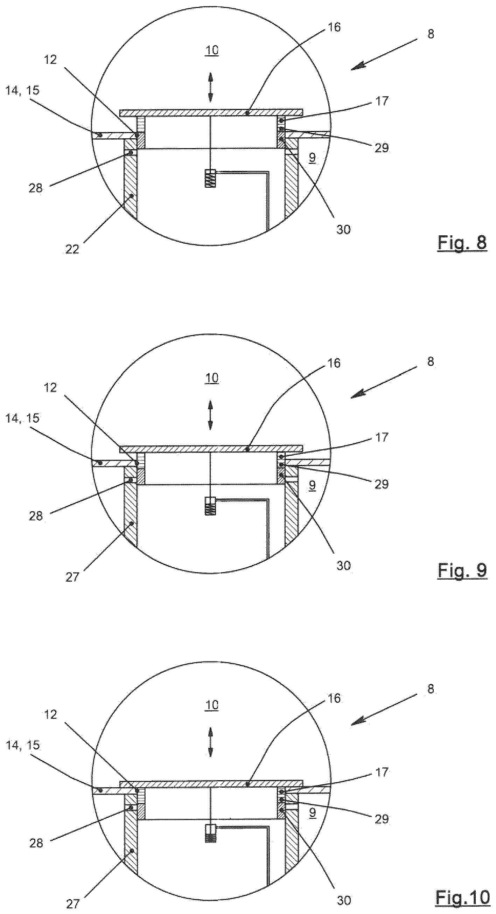

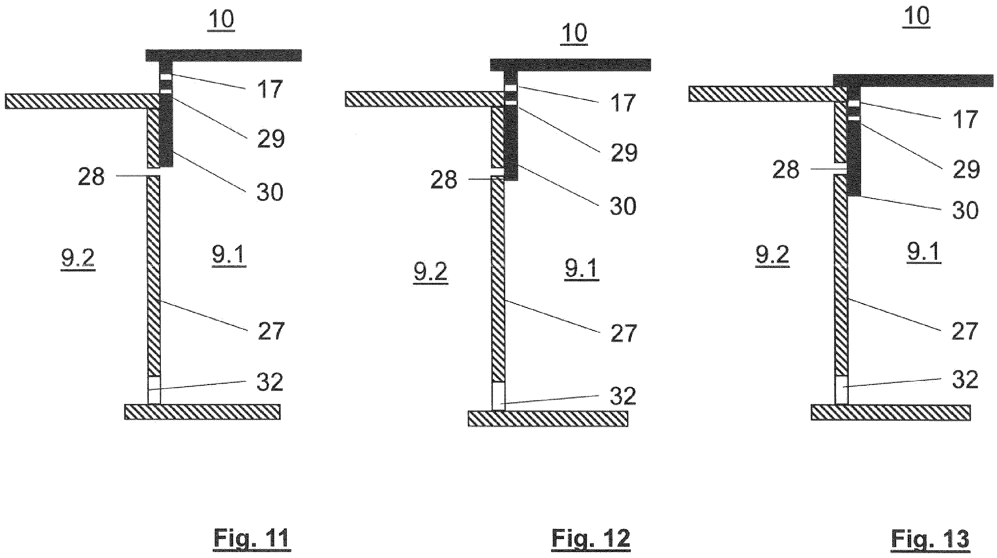

Dies kann beispielsweise dadurch erreicht werden, dass die Halterung 13, wie in den Figuren Fig. 8 bis 10 gezeigt, als eine hohlzylinderförmige Halterung 27 ausgeführt ist, wobei die Hebescheibe 16 die Deckfläche der hohlzylinderförmigen Halterung 27 und das Mannloch 3 mit der Mannlochabdeckung 4 die Grundfläche der hohlzylinderförmigen Halterung 27 ausbilden. Außerdem weist die hohlzylinderförmige Halterung 27 auf ihrer Mantelfläche einen oberen Diffusor 28 und eine in den Figuren 11 bis 13 dargestellten unteren Durchlassöffnung 32 auf, wobei die untere Durchlassöffnung 32 im unteren Abteil 9 einen ständigen Druckausgleich zwischen dem Innenraum der hohlzylinderförmigen Halterung 27 und dem die Mantelfläche der hohlzylinderförmigen Halterung 27 umgebenen Außenraum erreicht.

Auch ist an der Hebescheibe 16 neben dem (ersten) Diffusorring 17 ein zweiter Diffusorring 29 mit einem Schieberring 30 angeordnet, wobei ihre Dimensionierung derart ist, dass in einer zusätzlichen mittleren Stellung des Abteiltors 8 der innere Ring 12 den zweiten Diffusorring 29 verschließt und der Schieberring 30 den oberen Diffusor 28 verschließt. Der zweite Diffusorring 29 ist somit zwischen dem ersten Diffusorring 17 und dem Schiebering 30 angeordnet.

In den Fig. 8 bis 10 sind die drei Stellung des Abteiltors 8 zusammengefasst. In Fig. 8 sind die beiden Diffusorringe 17, 29 und der obere Diffusor 28 geöffnet. In Fig. 9 ist nur der Diffusorring 17 geöffnet. Der Diffusorring 29 und der obere Diffusor 28 hingegen sind geschlossen, so dass der Druckausgleich zwischen dem Innenraum der hohlzylinderförmigen Halterung 27 und dem die Mantelfläche der hohlzylinderförmigen Halterung 27 umgebenen Außenraum ausschließlich über die untere Durchlassöffnung erreicht wird. In Fig. 10 sind die Diffusorringe 17, 29 und der obere Diffusor 28 geschlossen.

Das alternative in den Figuren 8, 9 und 10 gezeigte Ausführungsbeispiel wird nun anhand der Figurrn11, 12 und 13 mit anderen Worten erläutert, Die Hebeeinrichtung ist mit einem doppelten Diffusor 17, 29 versehen und die Stützhalterung 27 mit einer oberen Durchlassöffnung 28 (oberen Diffusor 28) und einer unteren Durchlassöffnung 32. Das untere Abteil 9 ist funktional in zwei Unterabteile unterteilt, und zwar in bezogen auf die Stützhalterung 27 inneres Bedrückungsunterabteil 9.1 (Innenraum) und in ein äußeres Lagerunterabteil 9.2 (Außenraum).

In Figur 11 ist nun gezeigt, wie die Hebeeinrichtung 27 nominal ausgefahren und die Treibstoffflüssigkeit vom oberen Abteil 10 über die doppelte Diffusorreihe 17, 29 der Hebeeinrichtung 27 zum Bedrückungsunterabteil 9.1 und durch den oberen Diffusor 28 auch ins Lagerunterteil 9.2 gelangt. Nominal unten sind das Bedrückungsunterabteil 9.1 und das Lagerunterteil 9.2 zum Tankauslass immer offen verbunden. Die Treibstoffflüssigkeit kann nominal durch alle Abteile 9, 9.1.9.2 fließen. Der in Figur 8 gezeigte Zustand trifft in der ersten Antriebsphase, der sogenannten Boost Phase 1 ein.

In Figur 12 ist die erste Absenkung der Hebeeinrichtung gezeigt, um das Bedrückungsunterteil 9.1 und das Lagerabteil 9.2 oben zu entkoppeln. Dabei wird nur noch Fluid vom oberen Abteil 10 in das Bedrückungsunterteil zu 9.1 direkt geleitet. Diese Phase ist z.B. die Wiederbedrückung-Phase, bei der das warme Bedrückungsgas vom oberen Abteil 10 nur in das untere Bedrückungsabteil 9.1 geleitet wird. Hierdurch ist die freie Oberfläche für die Evaporation wesentlich kleiner als bei Öffnung des Bedrückungsabteils 9.1 zum Lagerabteil 9.2 im oberen Bereich. Wenn das untere Abteil 9 zum Beispiel eine eigene Leerraumgaszufuhr 18 (sekundär Bedrückungssystem) aufweist, wird die in Figur 9 gezeigte Position (bevorzugt) nicht eingestellt.

In Figur 13 ist gezeigt, wie die Hebeeinrichtung komplett abgesenkt ist. Sämtliche Diffusoröffnungen 17, 28, 29, sind geschlossen. Das obere Abteil 10 und das untere Abteil 9 sind fluidtechnisch getrennt voneinander. Lediglich das Bedrückungsabteil 9.1 und das Lagerabteil 9.2 sind über die untere Durchlassöffnung 32 fluidtechnisch miteinander verbunden bzw. nominal zueinander geöffnet.

Denkbar ist es, dass das Abteitores 8 vor allem bei Manövern mit Schwapp-Bewegungen und beim Aussetzten der Nutzlast, wo negative

Beschleunigungen entstehen, geschlossen wird. Damit wird verhindert, dass kalter Flüssigtreibstoff in das obere Abteil 10 gelangt und das warme Leerraumgas nur geringen Kontakt mit dem kalten Flüssigtreibstoff hat.

Denkbar ist es auch, dass das obere Abteil 10 auch ein Gaspuffer für ein Gas-Lageregelungssystem ist.

Offenbart sind ein Treibstofftank für einen Flüssigtreibstoff, mit einem Tankauslass (5) und einer Leerraumgaszufuhr (6) dadurch, dass der Innenraum des Treibstofftanks (1) durch einen Abteiltrenner (7) mit einem Abteiltor (8) in zwei Abteile (9, 10) unterteilt ist, die über das Abteiltor (8) fluidtechnisch miteinander verbindbar oder voneinander trennbar sind, wobei der Tankauslass (5) dem einen Abteil (9) und die Leergaszufuhr (6) dem anderen Abteil (10) zugeordnet sind ist und ein Verfahren zum Betreiben eines derartigen Treibstofftanks (1).

### Bezugszeichenliste

- 1: Treibstofftank
- 2: Tankwand
- 3: Mannloch
- 4: Mannlochabdeckung
- 5: Tankauslass
- 6: Leerraumgaszufuhr
- 7: Abteiltrenner
- 8: Abteiltor 8
- 9: unteres Abteil
- 9.1: Bedrückungsunterabteil / Innenraum
- 9.2: Lagerunterabteil / Außenraum
- 10: oberes Abteil
- 11: äußerer Ring
- 12: innerer Ring
- 13: Halterung
- 14: Auflageträgerstruktur
- 15: Plattenverbund
- 16: Hebescheibe
- 17: Diffusorring
- 18: eigene Leerraumgaszufuhr
- 19: Flüssigbrennstoff
- 20: Leerraumgas
- 21: Inertgas
- 22: Stößelstange
- 23: Zylinderkolbeneinheit
- 24: Druckfeder
- 25: Leitung
- 26: Zylinderraum
- 27: hohlzylinderförmige Halterung / Stützhalterung
- 28: oberer Diffusor
- 29: zweiter Diffusorring
- 30: Schieberring
- 32: untere Diffusoröffnung

## Patentansprüche

1. Treibstofftank für Flüssigtreibstoff, mit einem Tankauslass (5) und einer Leerraumgaszufuhr (6), wobei der Innenraum des Treibstofftanks (1) durch einen Abteiltrenner (7) mit einem Abteiltor (8) in zwei Abteile (9, 10) unterteilt ist, die über das Abteiltor (8) fluidtechnisch miteinander verbindbar oder voneinander trennbar sind, wobei der Tankauslass (5) dem einen Abteil (9) und die Leergaszufuhr (6) dem anderen Abteil (10) zugeordnet sind ist,
**dadurch gekennzeichnet, dass**
• das Abteiltor (8) eine Hebescheibe (16) mit einem an der Hebescheibe (16) befestigten Diffusorring (17, 29) aufweist, wobei
• bei geöffnetem Abteiltor (8) das untere Abteil (9) und das obere Abteil (10) über den Diffusorring (17, 29) miteinander verbunden und
• bei geschlossenem Abteiltor (8) das untere Abteil (9) und das obere Abteil (10) durch die Hebescheibe (16) voneinander getrennt sind.

2. Treibstofftank nach Anspruch 1, wobei der Abteiltrenner (7) einen äußeren, mit der Tankwand (2) verbundenen Ring (11) und einem das Abteiltor (8) tragenden inneren Ring (12) aufweist, wobei der äußere Ring (11) und der innere Ring (12) mittels einer Auflageträgerstruktur (14) miteinander verbunden sind und diese Auflagestruktur (14) einen Plattenverbund (15) trägt.

3. Treibstofftank nach Anspruch 2, wobei der Plattenverbund (15) zumindest teilweise aus dem gleichen Material wie die Auflageträgerstruktur (CFRP) besteht.

4. Treibstofftank nach Anspruch 2 oder 3, wobei der innere Ring (12) mit einer ein Mannloch (3) umgebenden Tankinnenstruktur (13) verbunden ist.

5. Treibstofftank nach einem der Patentansprüche 2 bis 4, wobei die Halterung (27) hohlzylinderförmig ausgebildet ist und auf ihrer Mantelfläche einen oberen Diffusor (28) aufweist, und wobei ein zweiter Diffusorring (29) und ein Schiebering (30) vorgesehen sind, derart, dass in einer mittleren Stellung des Abteiltors (8) der innere Ring (12) den zweiten Diffusorring (29) verschließt und der Schieberring (30) den oberen Diffusor (28) verschließt.

6. Treibstofftank nach Anspruch 4 oder 5, wobei der flexible Abteiltrenner (7) derart im Innenraum des Treibstofftanks (1) angeordnet ist, dass:
- das obere Abteil (10) die für die ersten Antriebsphase benötigten Menge an Flüssigtreibstoff aufnimmt und
- sich der in den nächsten Antriebsphasen benötigte Flüssigtreibstoff im unteren Abteil (9) befindet.

7. Treibstofftank nach Anspruch 5 oder 6, wobei im unteren Abteil (9) eine weitere Leerraumgaszufuhr (18) angeordnet ist, wobei die Leerraumgaszufuhren (6, 18) in Form eines Diffusors ausgeführt sind.

8. Verfahren zum Betrieb eines Treibstofftank nach einem der vorhergehenden Ansprüche, wobei das Abteiltor (8) bei Manövern mit Schwapp-Bewegungen und beim Aussetzten der Nutzlast geschlossen ist.

9. Verfahren nach Anspruch 8, wobei bei geschlossenem Abteiltor (8) und gleichzeitiger Flüssigtreibstoffentnahme aus dem unteren Abteil (9) über die eigene Leerraumgaszufuhr (18) ein Inertgas oder anderen Quellen in das untere Abteil (9) zugeführt wird.

## Claims

1. A propellant tank for liquid propellant, having a tank outlet (5) and an empty space gas supply (6), wherein the interior of the propellant tank (1) is divided into two sections (9, 10) by a section separator (7) with a section gate (8), which sections can be fluidically connected to one another or disconnected from one another by means of the section gate (8), wherein the tank outlet (5) is assigned to the one section (9) and the empty space gas supply (6) is assigned to the other section (10),
**characterized in that**
• the section gate (8) has a cam (16) with a diffuser ring (17, 29) which is fastened to the cam (16), wherein
• when the section gate (8) is open, the lower section (9) and the upper section (10) are connected to one another by means of the diffuser ring (17, 29), and
• when the section gate (8) is closed, the lower section (9) and the upper section (10) are separated from one another by means of the cam (16).

2. The propellant tank according to Claim 1, wherein the section separator (7) has an outer ring (11) connected to the tank wall (2) and an inner ring (12) supporting the section gate (8), wherein the outer ring (11) and the inner ring (12) are connected to one another by means of a load-supporting beam structure (14) and this load-supporting structure (14) supports a plate composite (15).

3. The propellant tank according to Claim 2, wherein the plate composite (15) at least partially consists of the same material as the load-supporting beam structure (CFRP).

4. The propellant tank according to Claim 2 or 3, wherein the inner ring (12) is connected to an internal structure of the tank (13), which surrounds a manhole (3).

5. The propellant tank according to any one of Patent Claims 2 to 4, wherein the holder (27) is formed in a hollow cylindrical manner and on its outer surface has an upper diffuser (28), and wherein a second diffuser ring (29) and a sliding ring (30) are provided in such a manner that in a central position of the section gate (8), the inner ring (12) seals the second diffuser ring (29) and the sliding ring (30) seals the upper diffuser (28).

6. The propellant tank according to Claim 4 or 5, wherein the flexible section separator (7) is arranged in such a manner in the interior of the propellant tank (1), that:
- the upper section (10) accommodates the quantity of liquid propellant required for the first propulsion phase, and
- the liquid propellant required in the next propulsion phases is located in the lower section (9).

7. The propellant tank according to Claim 5 or 6, wherein a further empty space gas supply (18) is arranged in the lower section (9), wherein the empty space gas supplies (6, 18) are realized in the form of a diffuser.

8. A method for operating a propellant tank according to any one of the preceding claims, wherein the section gate (8) is closed during manoeuvres with swash movements and when launching the payload.

9. The method according to Claim 8, wherein when the section gate (8) is closed and liquid propellant is removed from the lower section (9) at the same time, an inert gas or a gas from other sources is supplied to the lower section (9) by means of its own empty space gas supply (18).

## Revendications

1. Réservoir de carburant pour carburant liquide, avec une sortie de réservoir (5) et une arrivé de gaz d'espace vide (6), sachant que l'espace intérieur du réservoir de carburant (1) est divisé par un séparateur de compartiment (7) avec une porte de compartiment (8) en deux compartiments (9, 10), qui peuvent être reliés entre eux de manière fluidique ou séparés par la porte de compartiment (8), sachant que la sortie de réservoir (5) est attribuée à un compartiment (9) et l'arrivée de gaz d'espace vide (6) est attribuée à l'autre compartiment (10),
**caractérisé en ce que**
• la porte de compartiment (8) comporte un plateau de levage (16) avec une bague de diffuseur (17, 29 fixée sur le plateau de levage (16),
sachant que
• le compartiment inférieur (9) et le compartiment supérieur (10) sont reliés entre eux par la bague de diffuseur (17, 29) avec la porte de compartiment (8) ouverte, et
• le compartiment inférieur (9) et le compartiment supérieur (10) sont séparés l'un de l'autre par le plateau de levage (16) avec la porte de compartiment (8) fermée.

2. Réservoir de carburant selon la revendication 1, sachant que le séparateur de compartiment (7) comporte une bague extérieure (11) reliée à la paroi de réservoir (2) et une bague intérieure (12) portant la porte de compartiment (8), sachant que la bague extérieure (11) et la bague intérieure (12) sont reliées entre elles au moyen d'une structure de support d'appui (14) et cette structure de support d'appui (14) porte un matériau composite en plaques (15).

3. Réservoir de carburant selon la revendication 2, sachant que le matériau composite en plaques (15) est composé au moins en partie du même matériau que la structure de support d'appui (CFRP - polymère renforcé à la fibre de carbone).

4. Réservoir de carburant selon la revendication 2 ou 3, sachant que la bague intérieure (12) est reliée à une structure intérieure de réservoir (13) entourant un regard (3).

5. Réservoir de carburant selon l'une quelconque des revendications 2 à 4, sachant que la fixation (27) est constituée de forme cylindrique creuse et comporte un diffuseur supérieur (28) sur sa surface d'enveloppe et sachant qu'une deuxième bague de diffuseur (29) et une bague coulissante (30) sont prévues de telle manière que dans une position centrale de la porte de compartiment (8), la bague intérieure (12) ferme la deuxième bague de diffuseur (29) et la bague coulissante (30) ferme le diffuseur supérieur (28).

6. Réservoir de carburant selon la revendication 4 ou 5, sachant que le séparateur de compartiment flexible (7) est disposé dans l'espace intérieur du réservoir de carburant (1) de telle manière, que :
- le compartiment supérieur (10) reçoit la quantité en carburant liquide nécessaire à la première phase d'entraînement, et
- le carburant liquide nécessaire aux phases d'entraînement suivantes se trouve dans le compartiment inférieur (9).

7. Réservoir de carburant selon la revendication 5 ou 6, sachant qu'une autre arrivée de gaz d'espace vide (18) est disposée dans le compartiment inférieur (9), sachant que les arrivées de gaz d'espace vide (6, 18) sont exécutées sous la forme d'un diffuseur.

8. Procédé de fonctionnement d'un réservoir de carburant selon l'une quelconque des revendications précédentes, sachant que la porte de compartiment (8) est fermée lors de manœuvres avec des mouvements de ballottements et lors du décrochage de la charge utile.

9. Procédé selon la revendication 8, sachant qu'un gaz inerte ou un gaz d'autres sources sont acheminés dans le compartiment inférieur (9) par l'arrivée de gaz d'espace vide propre (18) avec la porte de compartiment fermée (8) et le prélèvement de carburant liquide simultané du compartiment inférieur (9).
